# EUROPEAN PATENT APPLICATION

(11) **EP 0 738 614 A1**
(43) Date of publication of application: **23.10.1996**
(21) Application number: 96105866.6
(22) Date of filing: 15.04.1996
(51) Int. Cl.: B60C 1/00, C08L 9/00, C08K 13/02

(54) **Tire with tread of cap-base construction**

(30) Priority: 21.04.1995 US 427298
(71) Applicant: THE GOODYEAR TIRE & RUBBER COMPANY, Akron, Ohio 44316-0001 (US)
(72) Inventor: Gabor, Jennifer Leigh, Cuyahoga Falls, Ohio 44221 (US); Rodgers, Michael Brendan, Akron, Ohio 44333 (US)
(74) Representative: Leitz, Paul

(57) **Abstract**

The invention relates to a tire **(1)** with a rubber tread of a cap/base construction wherein the tread base **(3)** is composed of carbon black and silica reinforced natural rubber and the tread cap **(2)** is composed of a blend of elastomers containing at least one medium to high vinyl polybutadien elastomer which is reinforced with carbon black and silica.

The invention particularly relates to truck tires.

## Description

### Field

This invention relates to a tire having a rubber tread of a cap/base construction wherein the tread base is composed of carbon black and silica reinforced natural rubber and the tread cap is composed of a blend of elastomers which is reinforced with a combination of carbon black and silica.

The invention particularly relates to truck tires.

### Background

Pneumatic rubber tires are conventionally prepared with a rubber tread which can be a blend of various rubbers which is typically reinforced with carbon black.

In one aspect, tires such as, for example, truck tires and heavy duty light truck tires, which are normally expected to be capable of supporting and carrying relatively large vehicular loads, tend to generate a greater internal temperature than comparable passenger vehicle-type tires.

The truck tire treads are typically of a cap/base construction, with the tread cap designed to be ground-contacting and, thus, contain a lug/groove configuration, and with the tread base underlying and supporting the tread cap and positioned between the tread cap and the tire carcass. The tread base is not intended to normally be ground-contacting and, thus, not normally intended to have the same measure of tread properties as, for example, the tread cap properties of traction and treadwear.

For such relatively heavy duty tires, heat buildup, evidenced by tire running temperature buildup, or increase is normally unwanted, although a substantial portion of the heat buildup, or temperature increase, is relatively unavoidable during a running of the tire under load.

However, it remains to be desirable to provide a rubber tire tread for use with tires on various heavy service vehicles, including light to medium trucks, which generate less heat under typical operational conditions since higher tire running conditions tend to prematurely age the tire rubber and associated tire construction and, thus; tend to shorten the effective life of the tire.

In another aspect, it is desired to provide such a tire which can generate less heat under operational conditions, yet have acceptable treadwear and traction (skid resistance).

It is envisioned that such tread would be of a cap/base construction. Tires having treads of cap/base construction, in general, are well known to those skilled in such tire tread art. For example, see US-A- 3 157 218 as being illustrative of such tread construction.

In the practice of this invention, it is envisioned that a cap/base constructed tread is provided in which the tread base is of a natural rubber composition reinforced with carbon black or a combination of carbon black and silica. It is further envisioned that the tread cap be reinforced with carbon black for which at least a portion of the carbon black reinforcement is replaced with precipitated silica accompanied with a silica coupler.

The purpose of the replacing a portion of the reinforcing carbon black filler with silica is to provide a tread cap which can run cooler, lower the tire rolling resistance, and also enhance tread traction capabilities, as compared to a comparable tread cap with an equivalent amount of carbon black reinforcing filler and without the silica. It is contemplated that a silica reinforced rubber tread would experience less temperature buildup than a comparable carbon black reinforced rubber tread under similar working conditions, namely, as a tire on a vehicle being run under loaded, operational conditions.

However, for many tire tread applications, it is contemplated that a replacement of a quantitative amount of carbon black by silica in a tire tread may compromise the treadwear aspect of the tire.

In one aspect for tire treads, various rubbers, or elastomers, are evaluated, selected and blended for a purpose of achieving desired tire tread properties and particularly a balance of tire tread characteristic properties, mainly, rolling resistance, traction and wear.

For various applications utilizing rubber, including applications such as tires and particularly tire treads, sulfur cured rubber is utilized which contains substantial amounts of reinforcing filler(s). Carbon black is commonly used for such purpose and normally provides or enhances good physical properties for the sulfur cured rubber. Particulate silica might also sometimes be used for such purpose, particularly if the silica is used in conjunction with a coupling agent. In some cases, a combination of silica and carbon black has been utilized for reinforcing fillers for various rubber products, including treads for tires.

It is important to appreciate that, conventionally, carbon black is considered to be a more effective reinforcing filler for rubber tire treads than silica if the silica is used without a coupling agent.

Indeed, at least as compared to carbon black, there tends to be a lack of, or at least an insufficient degree of, physical and/or chemical bonding between the silica particles and the rubber elastomers to enable the silica to become an effective, or efficient, reinforcing filler for the rubber for most purposes, including tire treads, if the silica is used without a coupler. While various treatments and procedures have been devised to overcome such deficiencies, compounds capable of reacting with the silica surface and interacting with the rubber elastomer molecule are desirable. The compound might be generally referred to, by those having skill such art, as coupling agents, or silica couplers or silica adhesives. Such coupling agents, for example, may be premixed, or pre-reacted, with the silica particles or added to the rubber mix during the rubber/silica processing, or mixing, stage. If the coupling agent and silica are added separately to the rubber mix during the rubber/silica mixing, or processing stage, it is considered that the coupling agent then combines in situ with the silica.

In particular, such coupling agents may be composed, for example, of a silane which has a constituent component, or moiety, (the silane portion) capable of reacting with the silica surface and, also, a constituent component, or moiety, capable of interacting with the rubber, particularly a sulfur vulcanizable rubber which contains carbon-to-carbon double bonds, or unsaturation. In this manner, then the coupler acts as a connecting bridge between the silica and the rubber and thereby enhances the rubber reinforcement aspect of the silica.

The rubber-interactive group component, or moiety, of the coupler may be, for example, one or more of groups such as mercapto, amino, vinyl, epoxy, and sulfur groups, preferably a sulfur or mercapto moiety and more preferably sulfur.

Numerous coupling agents are taught for use in combining silica and rubber such as, for example, silane coupling agents containing a polysulfide component, or structure, such as, for example, bis 3-(trialkoxysilylalkyl) polysulfide where the polysulfide bridge contains from 2 to 8 connecting sulfur atoms. Such a polysulfide might be, for example, bis-3-(triethoxysilylpropyl) tetrasulfide, trisulfide or disulfide (e.g. US-A- 3 873 489).

For silica reinforced tire treads, US-A-5 227 425 discloses the use of a solution polymerization prepared SBR which is silica reinforced with a filler of silica and carbon black which contains at least 30 weight percent silica with specified silica characterizations and in which is preferenced over an emulsion polymerization prepared SBR. US-A- 4 519 430 discloses a silica rich tire tread which contains solution or emulsion SBR, optionally with polybutadiene rubber and/or polyisoprene rubber together with a mixture of silica and carbon black, with silica being required to be a major component of the silica/carbon black reinforcing filler.

The term "phr" where used herein, and according to conventional practice, refers to parts of a respective material per 100 parts by weight or rubber, or elastomer.

In the description of this invention, the terms "rubber" and "elastomer", where used herein unless otherwise prescribed, are used interchangeably. The terms "rubber composition", "compounded rubber" and "rubber compound" where used herein unless otherwise prescribed, are used interchangeably to refer to rubber which has been blended or mixed with various ingredients or materials and such terms are well known to those having skill in the rubber mixing, or rubber compounding, art.

The Tg of a polymer, particularly an elastomer, as used herein unless other wise prescribed, refers to its glass transition temperature which can conventionally be determined, for example, by a differential scanning calorimeter at a heating rate of, for example, 10°C to 15°C, to an observed transition of the temperature versus time curve. It is understood that such Tg determination is well known to those having skill in such art.

### Summary and Practice of the Invention

In accordance with this invention, a pneumatic tire having a TRA maximum rated load limit of at least about 1220 kg, (2684 lbs), alternatively at least about 2730 kg, (6020 lbs), and generally in a range of 1220 kg to 5000 kg, (2684 to 11,013 lbs) at an inflation pressure in a range of 723 to 792 kPa (105 to 115 psi) and having a bead diameter of at least about 48 cm (19 inches), alternatively at least about 56 cm (22 inches), and generally in a range of 48 to 64 cm (19 to 25 inches) is provided having a rubber tread of cap/base construction wherein
(A) said tread cap is comprised of, based on 100 parts by weight rubber, (1) an elastomer composition comprised of (a) 20 to 70, alternatively 30 to 60, phr of at least one medium to high vinyl polybutadiene elastomer having a vinyl 1,2-content in a range of 35 to 80, alternatively 40 to 70, percent and (b) 30 to 80, alternatively 40 to 70, phr cis 1,4-polyisoprene natural rubber, (2) 40 to 85 phr, alternatively 50 to 80, phr of reinforcing filler comprised of (a) 5 to 70, alternatively 10 to 40, weight percent carbon black and, correspondingly, (b) 95 to 30, alternatively 90 to 60, percent precipitated silica and (c) at least one silica coupler having a silane moiety reactive with the surface of the silica and a moiety interactive with said elastomers; and
(B) said tread base is comprised of, based on 100 parts by weight rubber, (1) 100 parts by weight cis 1,4-polyisoprene natural rubber, (2) 35 to 55, alternatively 40 to 50, phr of reinforcing filler comprised of (a) 40 to 85, alternatively 50 to 85, weight percent carbon black and, correspondingly, 60 to 15, alternatively 50 to 15, weight percent precipitated silica.

The said tread cap rubber and said tread base rubber may also contain 10 to 45, alternatively 10 to 30, phr of at least one additional diene based elastomer selected from cis 1,4-polybutadiene elastomer, trans 1,4-polybutadiene elastomer, isoprene/butadiene copolymer elastomer, emulsion polymerization prepared styrene/butadiene copolymer elastomer, solution polymerization prepared styrene/butadiene copolymer elastomer and styrene/isoprene/butadiene terpolymer elastomer.

Correspondingly, with the addition of one or more of such additional elastomers to the tread cap and/or tread base and as would be understood by one having skill in the rubber compounding art, the sum of the aforesaid required basic natural rubber and medium to high vinyl polybutadiene elastomer content for the tread cap and the said basic natural rubber content for the said tread base would be represented as being 90 to 55 phr, alternatively 90 to 70 phr for the tread cap and/or tread base.

The said tread base rubber may also contain at least one silica coupler having a silane moiety reactive with the surface of the silica and a moiety interactive with said elastomers.

In one aspect, it is considered herein that for said tread cap, the weight ratio of carbon black to silica may be in a range of 2/1 to 1/4.

The aforesaid TRA "maximum rated load limit" characteristic of the tire is intended to differentiate a truck tire typically designed for running under load conditions substantially higher than conventional passenger tire loads from passenger tires. The term "TRA" refers to "The Tire and Rim Association Inc." which is well known to those familiar with tire manufacturing. It is referred to herein as "TRA". The TRA is an association which has, as a purpose "...the establishment and promulgation of interchangeability standards for tires, rims and allied parts for the guidance of manufacturers of such products ...". The TRA publishes an annual Yearbook, for example, the 1995 Yearbook which includes, for example, characterizations of truck tires and passenger tires, including maximum rated load values at various inflation pressures. It can readily be seen that most truck tires, particularly for medium truck tires and above, have maximum rated load values at various inflation pressures significantly greater than conventional passenger tires. Therefore, it is considered herein that such values effectively differentiate the intended truck tires for this invention from conventional passenger tires. For the purposes of the description of this invention, the rim diameters referenced in the TRA Yearbook are equated to tire bead diameters. Appropriately, the tire bead diameters are measured from the surface of the rubber encapsulated wire beads and not the wire portion of the beads, as is believed would be considered customary for such purpose.

It is further considered herein that the truck tires of this invention have an appreciably greater need for relatively cooler running tires than passenger tires which are expected to be utilized for substantially reduced loads. For a tire tread to contribute significantly to the cooler running of a tire, it is considered herein that a tread of cap/base construction is desirable where the tread base is primarily composed of cis 1,4-polyisoprene natural rubber and where the tread cap and tread base compositions cooperate to promote such effect. In practice, such tread is created by co-extruding the tread cap and tread base together through a singular die to form the extruded tread construction. The compounded rubber compositions are extruded through the die at a temperature in a range of 100°C to 125°C, typically about 110°C and, thus, is considered as being a relatively hot extrusion process, although such actual extrusion temperatures themselves are considered normal for a rubber extrusion process. The extruded tread stock is then built onto a rubber tire carcass to create an assembly thereof. The assembly is then vulcanized, or cured, at an elevated temperature. Such overall process is well known to those skilled in such art. In this manner then, by the aforesaid co-extrusion process and the covulcanization of the tread cap and tread base, the tread cap and tread base are considered herein to be an integral, cooperative, unit of the tire.

The aforesaid tread cap and tread base, by the hot co-extrusion thereof followed by their co-vulcanization, are considered to be an integral tread structure, or tire component, and not a simple laminate in which two pieces of rubber are separately prepared and then cemented together or pressed together and then vulcanized.

Accordingly, it is considered herein that the tread cap and tread base, as an integral structure, or tire component, desirably cooperate to promote the cooler running effect for the tire. By the term cooler running for the tire tread it is meant that internal operating temperatures are sufficiently low so as to reduce, or retard, heat degradation of the tire tread rubber compositions. An example of such cooler running effect is intended to be manifested in a longer service life for the tire carcass, or casing. It is known to those having skill in truck tire usage that cooler running tire treads are desirable in order to lengthen, or increase, tire life insofar as heat durability is concerned.

The rubber blend for the tread cap, which is intended to be ground-contacting during use of the tire, and is required to be of a base rubber blend of said natural rubber and said medium to high vinyl polybutadiene, in combination with the primarily natural rubber based tread base. Such base rubber blend for the tread cap is considered herein to be an important feature of the invention and designed to enhance treadwear, heat buildup and rolling resistance of a tire tread containing a substantial amount of both carbon black and silica reinforcement.

The relatively medium to high vinyl polybutadiene for the tread cap is considered herein to be an important aspect of the invention because the relatively high vinyl content of the polybutadiene elastomer is considered to provide a greater interaction with the silica reinforcement, which is believed to be due at least in part, to the stereochemistry of the carbon-to-carbon double bond contained in the pendant 1,2-vinyl structure contained on the elastomer polymer, particularly where the silica reinforcement is utilized in combination with the aforesaid silica coupler.

In the practice of this invention, a contribution of the polyisoprene natural rubber for the tread cap is believed to improve one or more of the tire tread's resistance to damage, the tread's traction rolling resistance and treadwear properties.

A contribution of the polyisoprene natural rubber for the tread base is intended to promote less heat buildup and, thus, a cooler running tire.

The aforesaid optional use of 10 to 45, or 10 to 30, phr of at least one additional diene based elastomer in the tire tread cap is considered herein to be an additional tool to optimize tire tread properties such as, for example, tire treadwear rates.

For example, the said optional cis 1,4-polybutadiene rubber (BR), conventionally with a Tg in a range of -85°C to -105°C, is believed to be beneficial to enhance the tire treadwear when it is used in the tread cap. The BR used in a tread base is considered to be a cooler running elastomer than the preferred natural rubber, however, the natural rubber is typically preferred because it is considered herein that it has greater strength. The BR typically has a cis 1,4-content in a range of 93 to 99 percent.

The use of such BR in rubber blend for grounding portions of treads such as, for example, tread cap rubber compositions, is well known to those having skill in such art.

A contribution of the optional trans 1,4-polybutadiene to the tread cap or tread base is believed to, in one aspect, aid in increasing the stiffness property of the tire tread. In some respects, it might be considered for a partial replacement of the natural rubber.

A contribution of the optional emulsion polymerization prepared styrene/butadiene copolymer elastomer is believed to, on one aspect, aid in increasing a stiffness property and, for the tread cap, in enhancing tire traction property(ies) of the tire tread. A contribution of the optional solution polymerization prepared styrene/butadiene copolymer elastomer for the tread cap is believed to, one aspect, aid in enhancing tire traction property(ies) of the tire tread. In general, it is considered that such styrene/butadiene copolymer elastomers are more suitably used for the tread cap than the tread base.

A contribution of the optional isoprene/butadiene copolymer elastomer is believed to, in one aspect, aid in improving rubber compound mixing and homogeneity of the compound ingredient dispersion which is considered herein to be a valuable contribution.

The synthetic elastomers can be prepared, for example, by organic solution polymerization of respective monomers or, in the case of emulsion polymerization prepared styrene/butadiene copolymer elastomers by polymerization in a water medium together with appropriate emulsifiers and catalyst. Such preparation of elastomers is, in general, well known to those skilled in such art.

Thus, in the practice of this invention, a tire tread of a cap/base construction is provided which relies upon cooperative tread cap and tread base constructions for a truck tire tread intended to be capable of utilization under loaded conditions and designed to be relatively cool running. It is considered herein that in a tire, the utilization for its tire tread (i) a tread cap composed of a base blend of a relatively high vinyl polybutadiene elastomer with cis 1,4-polyisoprene natural rubber together with the silica/carbon black reinforcement which utilizes a silica coupler and, in a cooperative relationship, (ii) a tread base composed primarily of cis 1,4-polyisoprene natural rubber together with filler composed of carbon black reinforcement, which can optionally contain a minor amount of silica, is novel, particularly for a truck tire. The invention is intended to provide such a tire which has enhanced relatively cool running characteristics while also having acceptable treadwear.

The accompanying drawings are provided for further understanding of the invention, although it is not intended that the invention be limited to the presentation of the drawings. In the drawings;

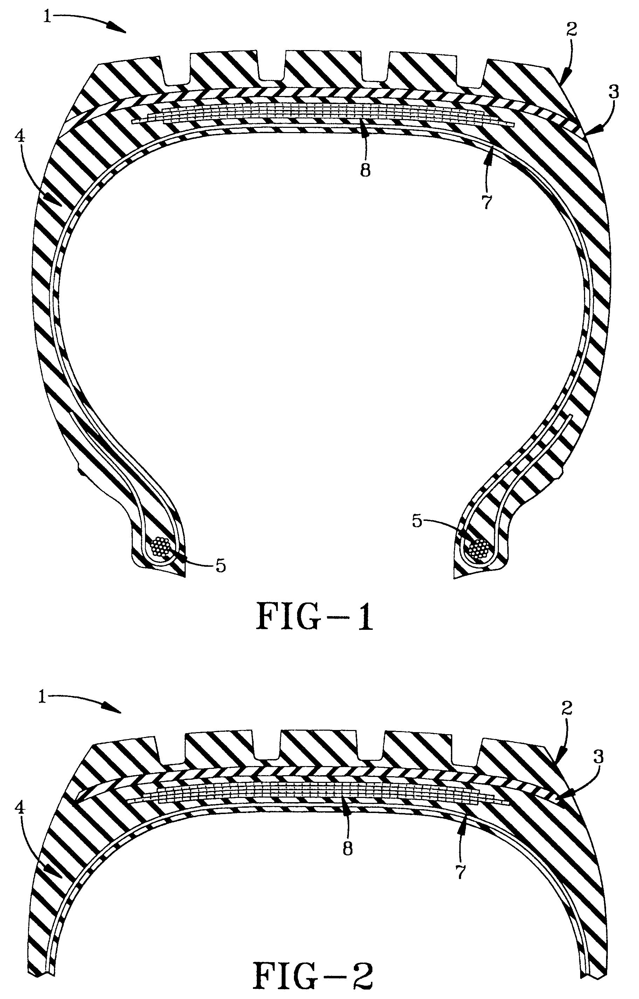

FIG 1 is a cross-sectional view of a vulcanized tire showing a tread with a cap/base construction where the tread cap is of a lug and groove configuration, and where the tread base supports the tread cap and extends to the outer side surface of the tire, together with a portion of a supporting radial ply carcass. Sometimes a tire tread configuration, composed of lugs and grooves, also contains ribs which are not shown in this drawing. Such tire tread lug and groove construction, with and without ribs, are well known to those having skill in such art.
FIG 2 is a cross-sectional view of a vulcanized tire showing a tread with a cap/base construction where the tread cap is of a lug and groove configuration, together with a portion of a supporting radial ply carcass, wherein the tread base supports the tread cap and terminated within the shoulder region of the tire carcass.

Referring to the drawings, a tire construction 1 is provided with a circumferential tread component composed of a tread cap 2 and tread base 3 construction. The tire has a carbon black reinforced rubber carcass 4 which is composed of spaced beads 5 encased with carbon black reinforced rubber, carbon black reinforced rubber sidewalls 6 and supporting carcass plies 7 and circumferential belt 8. In one aspect the carcass plies 7 of the carcass 4, for the truck tire, has steel cord 8 reinforcement.

The rubber tread base 3 is carbon black reinforced with at least 40 phr of reinforcing filler composed of carbon black and, optionally, a minor amount of silica. The sidewall rubber 6 and rubber for the beads 5 and carcass 4 is reinforced with carbon black. The tread base elastomer is cis 1,4-polyisoprene natural rubber which contains about 30 phr of carbon black reinforcement and about 15 phr of silica. It optionally contains a silica coupler.

The rubber tread cap 2 is reinforced with about 70 phr of reinforcing filler composed of about 30 phr of carbon black and about 40 phr of precipitated silica together with a silica coupler. The tread cap rubber is composed of about 70 phr of cis 1,4-polyisoprene natural rubber and about 30 phr of a relatively high vinyl polybutadiene elastomer containing about 65 percent vinyl 1,2-units.

The siliceous pigments to be used as reinforcement in the tread cap of this invention are precipitated siliceous pigments (silica). Such precipitated silicas are prepared, for example, by controlled acidification of a soluble silicate, e.g., sodium silicate.

The siliceous pigment (silica) may, for example, have an ultimate particle size in a range of 50 to 10,000 angstroms, preferably between 50 and 400 angstroms. The BET surface area of the pigment, as measured using nitrogen gas, is preferably in the range of 80 to 300, perhaps even up to about 360, although more usually 100 to 200, square meters per gram. A BET method of measuring surface area is described in the Journal of the American Chemical Society, Volume 60, page 304 (1930).

The silica also typically has a dibutylphthalate (DBP) absorption value in a range of 150 to 350, and more typically 200 to 300.

The silica might have an average ultimate particle size, for example, in a range of 0.01 to 0.05 micron as determined by the electron microscope, although the silica particles may be even smaller in size.

Various commercially available silicas may be considered for use in this invention such as, for example, only and without limitation, silicas commercially available from PPG Industries under the Hi-Sil trademark with designations HI-Sil 210, Hi-Sil 243, etc which might be sometimes referred to as classical silicas; silicas available from Rhone-Poulenc, such as, for example, Zeosil 1165MP, silicas available from Degussa AG with designations such as, for example, VN2, VN3, which might sometimes be referred to as classical silicas, and BV3370GR, and silicas available from J.M. Huber such as, for example, Zeopol 8745.

Mercury surface area/porosity is the specific surface area determined by mercury porosimetry. For such technique, mercury is penetrated into the pores of the sample after a thermal treatment to remove volatiles. Set up conditions may be suitably described as using a 100 mg sample; removing volatiles during 2 hours at 105°C and ambient atmospheric pressure; ambient to 2000 bars (200 MPa) pressure measuring range. Such evaluation may be performed according to the method described in Winslow, Shapiro in ASTM bulletin, p.39 (1959) or according to DIN 66133. For such an evaluation, a CARLO-ERBA Porosimeter 2000 might be used.

The average mercury porosity specific surface area for the silica, in general, should be in a range of 100 to 300 m²/g and for specialized silicas for use in this invention, a range of 150 to 220 m²/g. It is recognized that such range overlaps and, thus, includes many classical silicas.

A suitable pore size distribution for the silica, in general, according to such mercury porosity evaluation is considered herein to be:

Five percent or less of its pores have a diameter of less than about 10 nm; 60 to 90 percent of its pores have a diameter of 10 to 100 nm; 10 to 30 percent of its pores have a diameter of 100 to 1000 nm; and 5 to 20 percent of its pores have a diameter of greater than about 1000 nm.

The physical configurations of the actual silica aggregates, which are themselves composed of pluralities of primary silica particles joined together, is important for the tread rubber composition of this invention. The physical configuration of the silica aggregate is considered to contain concave regions of various volumes which are referred to herein as macropores and sometimes referred to simply as pores and, collectively, as a measure of porosity of the silica.

The aforesaid macropores apparently capture or grasp portions of the elastomer during the mixing of elastomer and silica. It is considered herein that the containment, or capture, of a portion of the elastomer within the macropore regions of the silica aggregate substantially enhances the reinforcing effect of the silica aggregates for the tread rubber of this invention.

It appears to be important that the average volume of the macropores of the silica aggregate configuration be neither too small nor too large for an optimization of this effect.

Thus, for the specialized silicas when used in this invention, the pore diameters, or pore diameter distribution thereof, may be measured by the aforesaid mercury porosimetry and calculated by, for example, the Washburn equation with an angle of contact that is equal to about 140 degrees and a surface tension gamma equal to about 480 dynes/cm using an instrument such as Porosimeter 2000 by Carlo Erba Instruments.

The pore size distribution for consideration in this invention is represented by an average pore diameter ratio of V2/V1 and is considered herein to be less than 30 for classical silicas and greater than 30, for example, average ratios in a range of 30 to 70, for the specialized silicas for use in this invention. The V2/V1 ratio is a ratio of pore volumes having a diameter between 17.5 to 27.5 m²/g (V2) to pore volumes having diameters between 10 to 40 m²/g (V1). A higher V2/V1 value is considered herein to be more desirable, or optimal, for elastomer/silica interaction.

A V(Hg) is represented herein as the total volume of mercury which penetrates the silica, according to the aforesaid mercury porosimetry testing procedure, in terms of cm³/gm. A representative V(Hg) for classical silicas is believed to be less than 1.7 and for specialized silicas greater than 1.7 with, for example, average values in a range of 1.7 or 1.75 to 1.95, for silicas contemplated for use in this invention. The V(Hg) value is believed to indicative of the overall porosity of the silica with a higher number representing a silica with a greater overall pore volume.

A PSD max value is a pore size maximum value represented herein as a first derivative inflection point in a curve represented as a plot of V(Hg), (y axis), versus pore size diameter, nm, (x axis). For classical silicas, an average value is considered herein to be about 35 or greater and for specialized silicas an average value of 45 or less is believed to be representative values. It is recognized that the aforesaid ranges of values may overlap somewhat. The PSD max value is believed to be indicative of a most representative pore size of the silica aggregate.

Thus, it is believed herein that a definitive measure of values for a specialized silica for use in some aspects of this invention is a combination of (i) BET surface area of 160 to 200, (ii) an average V(Hg) value in a range of 1.7 to 1.95, (iii) an average PSD max in a range of 10 to 45 and (iv) an average V2/V1 ratio in a range of 30 to 65. The combination of these values is believed to be a fingerprint of suitable specialized silicas which may be used in this invention and is intended to differentiate such silicas from classical silicas.

It is readily understood by those having skill in the art that the rubber composition of the tread rubber would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, silica and carbon black. As known to those skilled in the art, depending on the intended use of the sulfur vulcanizable and sulfur vulcanized material (rubbers), the additives mentioned above are selected and commonly used in conventional amounts.

Typical additions of carbon black, silica and silica coupler for this invention are hereinbefore set forth.

Typical amounts of tackifier resins, if used, comprise 0.5 to 10 phr, usually 1 to 5 phr. Typical amounts of processing aids comprise 1 to 20 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine and others, such as, for example, those disclosed in the Vanderbilt Rubber Handbook (1978), pages 344-346. Typical amounts of antiozonants comprise 1 to 5 phr. Typical amounts of fatty acids, if used, which can include stearic acid comprise 0.5 to 4 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for-example, dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, with a range of from one to 2.5, being preferred.

Accelerators are used to control the time and/or temperature required for vulcanization and to improve the properties of the vulcanizate. Retarders are also used to control the vulcanization rate.

In one embodiment, a single accelerator system may be used, i.e., primary accelerator. Conventionally and preferably, a primary accelerator(s) is used in total amounts ranging from 0.5 to 4, preferably 0.8 to 2.5, phr. In another embodiment, combinations of a primary or and a secondary accelerator might be used, with the secondary accelerator being used in amounts of 0.05 to 3 phr, for example, in order to activate and to improve the properties of the vulcanizate. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent and accelerator(s) are not considered to be an aspect of this invention which is more primarily directed to the use of silica as a reinforcing filler in combination with a coupling agent in a prescribed rubber-blend.

The presence and relative amounts of the above additives are not considered to be an aspect, except as may hereinbefore be set forth, of the present invention which is more primarily directed to the tire with cap/base construction utilizing specified blends of elastomers in the tread cap and in the tread base, namely, primarily natural rubber and relatively high vinyl polybutadiene elastomer for the tread cap and primarily natural rubber for the tread base and with both the cap and base being reinforced with reinforcing filler composed of carbon black and precipitated silica.

The tire can be built, shaped, molded and cured by various methods which will be readily apparent to those having skill in such art.

The invention may be better understood by reference to the following examples in which the parts and percentages are by weight unless otherwise indicated.

### EXAMPLE I

Rubber compositions (compounded rubber) were prepared of various blends of cis 1,4-polyisoprene natural rubber and relatively high vinyl polybutadiene elastomer and referred to herein as Samples A, B and C.

A control rubber composition composed of cis 1,4-polyisoprene natural rubber and cis 1,4-polybutadiene elastomer was prepared and identified herein as Sample X.

A tread base rubber composition was prepared composed of cis 1,4-polyisoprene natural rubber was prepared and identified herein as Sample Y.

The rubber compositions were prepared by mixing the ingredients in several sequential non-productive mixing stages (without the curatives) and a final productive mixing stage (basically for the curatives), then the resulting composition was cured under conditions of elevated temperature and pressure, namely, for about 30 minutes at about 150°C.

The cured rubber compositions were then tested with various laboratory testing equipment to obtain physical properties of the rubber compositions which were then used to predict properties of a truck tire with a tread of a cap/base construction.

The rubber compositions were comprised of the ingredients illustrated in Table 1. The values, for the most part, are simply rounded to the nearest whole number.

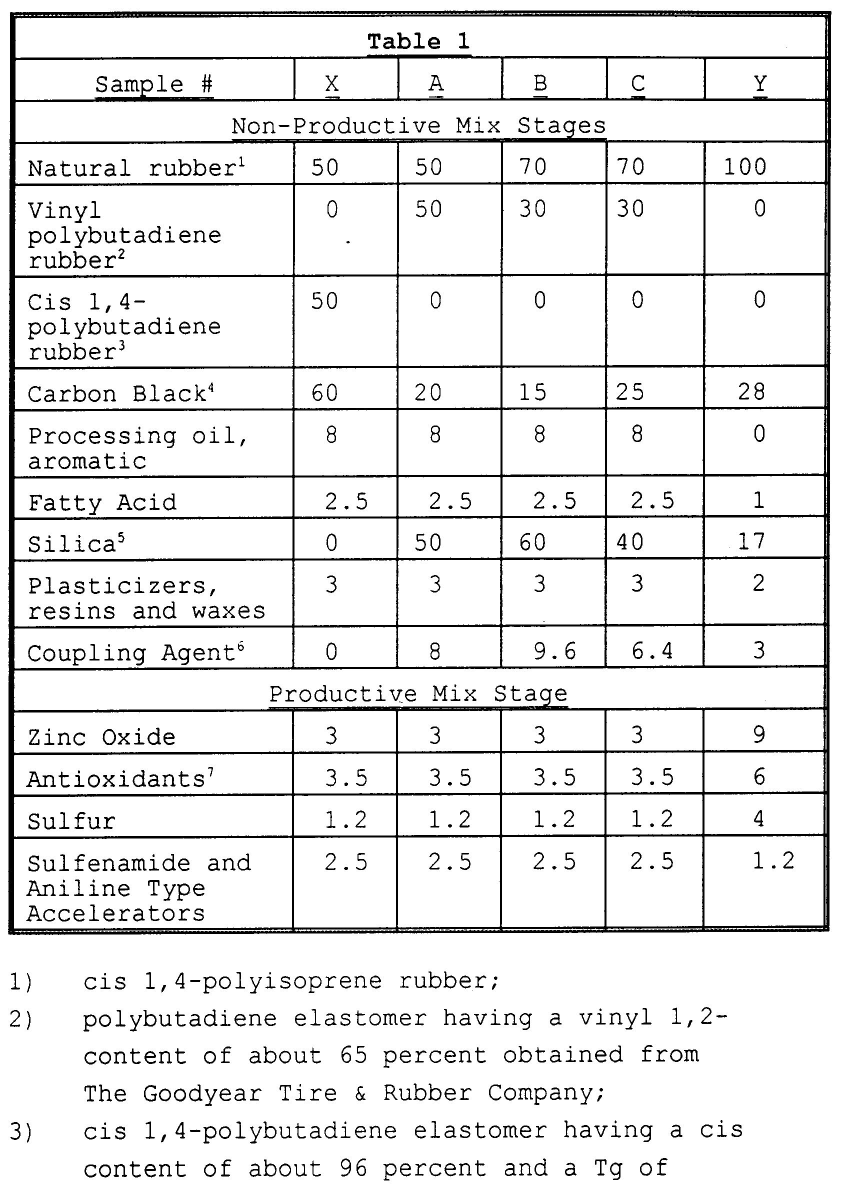

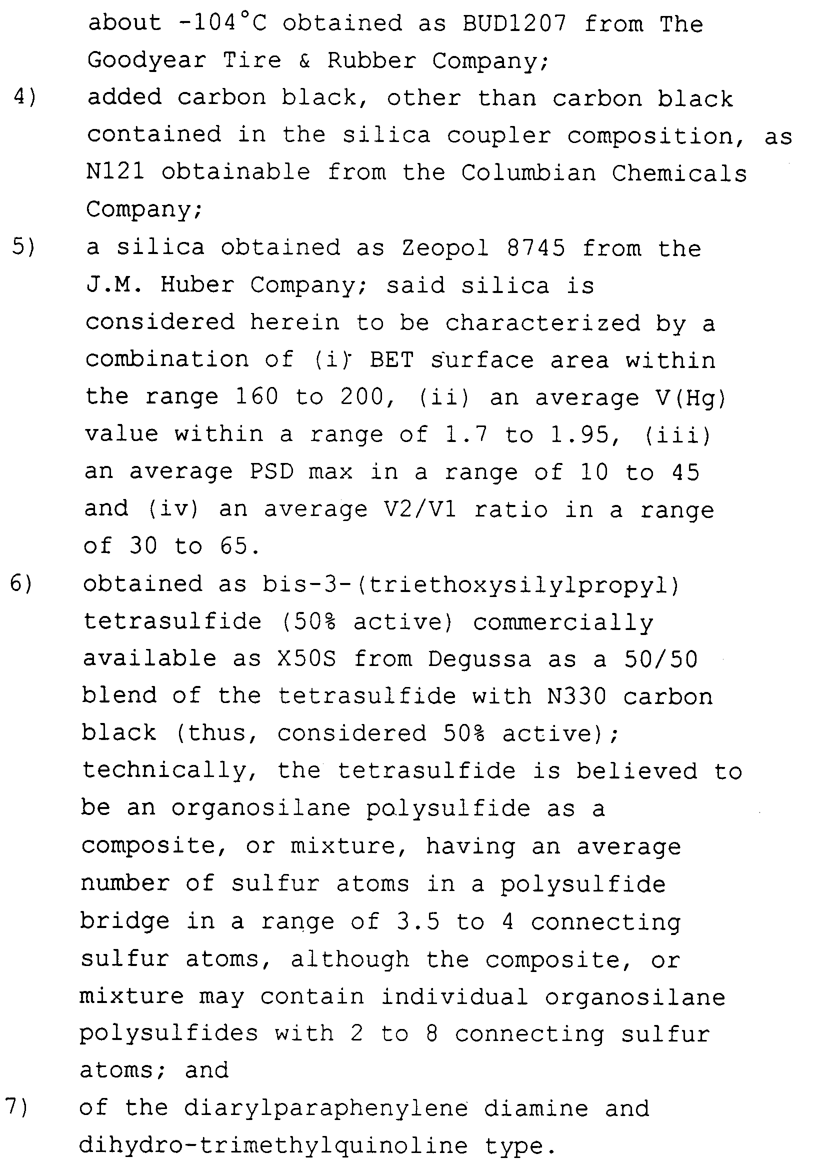

Various properties of the cured samples were determined by conventional means and reported in the following Table 2.

**Table 2**

| Sample # | X | A | B | C | Y |
|---|---|---|---|---|---|
| 300% Modulus (Mpa) | 11.09 | 15.24 | 17.3 | 15.72 | 11.15 |
| Tensile Strength (MPa) | 18.45 | 15.35 | 17.33 | 17.10 | 17.94 |
| Elongation (%) | 480 | 325 | 313 | 311 | 468 |
| Hardness | 66 | 68.1 | 73.1 | 70.6 | 57.3 |
| Rebound (100 °C) | 57.1 | 64.4 | 63.4 | 67.7 | 76.0 |
| Flexometer Temperature (°C) | 29.1 | 21.1 | 20.8 | 16.7 | 8.3 |
| Percent Set | 2.44 | 1.45 | 1.8 | 1.25 | 0.59 |
| E' at 0°C (MPa) | 32.9 | 31.5 | 42.5 | 24.7 | 26.7 |
| E' at 60°C (MPa) | 19.7 | 20.0 | 26.5 | 17.5 | 11.7 |
| Tan. Delta at 0°C | .087 | .112 | .098 | .104 | .121 |
| Tan. Delta at 60°C | .091 | .073 | .062 | .057 | .056 |

For the tensile elongation and 300% modulus values tests, refer to ASTM Test D412-92, method B.

For the rebound tests, refer to DIN 53512.

For the hardness, Shore A as in ASTM 2240-91 may be referred to as determined at room temperature, or about 23°C.

For the flexometer test refer to ASTM Test D623. The flexometer test is considered herein to be significant because it specifically measures the temperature rise in the rubber test sample and the dimensional changes of the sample over time. The flexometer test is well known to those skilled in rubber composition evaluations particularly for use in tires.

For the E' values, which are sometimes referred to as the tensile storage modulus, reference may be made to Science and Technology of Rubber, second edition, 1994, Academic Press, San Diego, CA, edited by James E. Mark et al, pages 249-254. The use of the storage modulus, E', to characterize rubber compositions is well known to those having skill in such art.

The tangent delta, or tan. delta, is a ratio of the tensile loss modulus, also known as E'', to the tensile Storage modulus (E'). These properties, namely the E', E'' and tan. delta, characterize the viscoelastic response of a rubber test sample to a tensile deformation at a fixed frequency and temperature, most often measured at 0°C and 60°C.

The tan. delta and tensile Storage modulus (E') are well known to those skilled in the rubber composition characterization art, particularly as relates to tires and tire treads. The tensile storage modulus (E') values are indicative of rubber compound stiffness which can relate to treadwear rates and evenness of treadwear. The tan. delta value at 60 or 0°C is considered as being indicative of hysteresis, or heat loss. Additionally, the tan. delta value at 0°C has been empirically correlated to tire tread skid properties and is well known in the art as a predictor of tire tread traction, or skid, properties.

In particular, the lower flexometer temperature rise values shown for Samples A, B, and C versus the higher flexometer temperature value shown for Control Sample X illustrate that the tire tread cap compositions made of either of the rubber compositions represented by Samples A, B or C would build up less heat under tire operating conditions than a tread cap of a rubber composition represented by Control Sample X and, thus, provide a cooler running tire tread, particularly when coupled, or combined, with the tread base Y to form a tire tread, which in comparison to Control Sample X, builds up very little heat in the flexometer testing.

Indeed, it is considered herein to be significant that the tire tread cap composition candidates, represented by Samples A, B and C are composed of natural rubber and a relatively high vinyl polybutadiene elastomer which is reinforced with a combination of carbon black and silica together with a silica coupler.

Accordingly, it is considered herein that rubber composition properties of the tire tread cap rubber compositions A, B and C taken together with tire base composition Y, particularly when compared with comparative control tire cap composition X, are predictive that a cap/base tread construction of this invention will provide a tire with enhanced (i) traction as evidenced by the tan. delta values at 0°C and rolling resistance as evidenced by rebound values at 100°C and tan. delta values at 60°C, (ii) tread with a cooler internal running temperature as evidenced by the flexometer temperature values; and (iii) acceptable treadwear as evidenced by a combination of 300 percent modulus, tensile strength and storage modulus (E') at 0°C and at 60°C.

Indeed it is considered herein that the cooperative combination of the outer tread cap and underlying tread base provides the following benefit: promotion of a cooler internal running temperature for the overall tread under operating conditions, namely running under load, which is predictively evidenced by the flexometer temperature values. This is considered as being beneficial to truck tire users by promoting a longer lasting, due to the cooler running tread concept, and acceptable treadwear tire with potential fuel economy.

In practice, in the manufacture of tires, their individual rim size is conventionally incorporated into tire size terminology by being molded into the sidewall of the tire. Such terminology may read, for example, as 11R24.5, 295/75R22.5, 285/75R24.5, or 11R22.5. For example, an inscription of 11R24.5 would mean a radial ply tire having a width of 11 inches, and a rim diameter of 24.5 inches.

While certain representative embodiments and details have been shown for the purpose of illustrating the invention, it will be apparent to those skilled in this art that various changes and modifications may be made therein without departing from the scope of the claims.

## Claims

1. A pneumatic tire having a TRA rated load limit of at least about 1220 kg at an inflation pressure in a range of 723 to 792 kPa and having a bead diameter of at least about 48 cm is provided having a rubber tread of cap/base construction characterized in that
(A) said tread cap is comprised of, based on 100 parts by weight rubber, (1) an elastomer composition comprised of (a) 20 to 70 phr of at least one medium to high vinyl polybutadiene elastomer having a vinyl 1,2-content in a range of 35 to 80 percent and (b) 30 to 80 phr cis 1,4-polyisoprene natural rubber, (2) 40 to 85 phr of reinforcing filler comprised of (a) 5 to 70 weight percent carbon black and, correspondingly, (b) 95 to 30 percent precipitated silica and (c) at least one silica coupler having a silane moiety reactive with the surface of the silica and a moiety interactive with said elastomers; and
(B) said tread base is comprised of, based on 100 parts by weight rubber, (1) 100 parts by weight cis 1,4-polyisoprene natural rubber, (2) 35 to 55 phr of reinforcing filler comprised of (a) 40 to 85 weight percent carbon black and, correspondingly, 60 to 15 weight percent precipitated silica.

2. The tire of claim 1 characterized in that the said silica has a BET surface area in a range of 100 to 360 and a DBP absorption value in a range of 200 to 400.

3. The tire of claim 1 characterized in that, for said tread cap, the weight ratio of carbon black to silica is in a range of 2/1 to 1/4.

4. The tire of claim 1 characterized by having a TRA rated load limit in a range of 1220 kg to 5000 kg, at an inflation pressure in a range of 723 to 792 kPa and a bead diameter in a range of 48 to 64 cm.

5. The pneumatic tire of claim 1 having a TRA rated load limit of at least about 2730 kg, at an inflation pressure in a range of 723 to 792 kPa, a bead diameter of at least about 56 cm and a rubber tread of an integral cap/base construction characterized in that
(A) said tread cap is comprised of, based on 100 parts by weight rubber, (1) an elastomer composition comprised of (a) 30 to 60, phr of medium to high vinyl polybutadiene elastomer having a vinyl 1,2-content in a range of 40 to 70, percent and (b) 40 to 70, phr cis 1,4-polyisoprene natural rubber, (2) 50 to 80 phr of reinforcing filler comprised of (a) 5 to 40, weight percent carbon black and, correspondingly, (b) 95 to 60, percent precipitated silica and (c) at least one silica coupler having a silane moiety reactive with the surface of the silica and a moiety interactive with said elastomers; and
(B) said tread base is comprised of, based on 100 parts by weight rubber, (1) 100 parts by weight cis 1,4-polyisoprene natural rubber, (2) 35 to 50 phr of reinforcing filler comprised of (a) 50 to 85 weight percent carbon black and, correspondingly, 50 to 15 weight percent precipitated silica.

6. The tire of claim 1 characterized in that the said tread cap also contains 10 to 45 phr of at least one additional diene based elastomer selected from cis 1,4-polybutadiene elastomer, trans 1,4-polybutadiene elastomer, isoprene/butadiene copolymer elastomer, emulsion polymerization prepared styrene/butadiene copolymer elastomer, solution polymerization prepared styrene/butadiene copolymer elastomer and styrene/isoprene/butadiene terpolymer elastomer; and wherein said silica is characterized by a combination of (i) BET surface area of 160 to 200, (ii) an average V(Hg) value in a range of 1.7 to 1.95, (iii) an average PSD max in a range of 10 to 45 and (iv) an average V2/V1 ratio in a range of 30 to 65.

7. The tire of claim 1 characterized in that said tread base also contains 10 to 30 phr of at least one additional diene based elastomer selected from cis 1,4-polybutadiene elastomer, trans 1,4-polybutadiene elastomer, and isoprene/butadiene copolymer elastomer.

8. The tire of claim 5 characterized in that the said tread base also contains 10 to 30 phr of at least one additional diene based elastomer selected from cis 1,4-polybutadiene elastomer, trans 1,4-polybutadiene elastomer, and isoprene/butadiene copolymer elastomer and where said tread base also contains at least one silica coupler having a silane moiety reactive with the surface of the silica and a moiety interactive with said elastomers; and wherein said silica is characterized by a combination of (i) BET surface area of 160 to 200, (ii) an average V(Hg) value in a range of 1.7 to 1.95, (iii) an average PSD max in a range of 10 to 45 and (iv) an average V2/V1 ratio in a range of 30 to 65.

9. The tire of claim 1 or 5 characterized in that the said tread base also contains at least one silica coupler having a silane moiety reactive with the surface of the silica and a moiety interactive with said elastomers.

10. The tire of claim 1 or 9 characterized in that the said coupler is a bis-3-(trialkoxysilylalkyl) polysulfide having a polysulfide bridge containing from 2 to 8 connecting sulfur atoms.

11. The tire of claim 5 characterized in that, for said tread cap, said silica is characterized by a combination of (i) BET surface area of 160 to 200, (ii) an average V(Hg) value in a range of 1.7 to 1.95, (iii) an average PSD max in a range of 10 to 45 and (iv) an average V2/V1 ratio in a range of 30 to 65.

12. The tire of claim 5 characterized in that the said tread cap also contains 10 to 45 phr of at least one additional diene based elastomer selected from cis 1,4-polybutadiene elastomer, trans 1,4-polybutadiene elastomer, isoprene/butadiene copolymer elastomer, and emulsion polymerization prepared styrene/butadiene copolymer elastomer; wherein said silica for said cap is characterized by a combination of (i) BET surface area of 160 to 200, (ii) an average V(Hg) value in a range of 1.7 to 1.95, (iii) an average PSD max in a range of 10 to 45 and (iv) an average V2/V1 ratio in a range of 30 to 65; wherein said coupler for said silica in said tread cap is a bis-3-(trialkoxysilylalkyl) polysulfide having a polysulfide bridge containing from 2 to 8 connecting sulfur atoms; and wherein said tread base also contains 10 to 30 phr of at least one additional diene based elastomer selected from cis 1,4-polybutadiene elastomer, trans 1,4-polybutadiene elastomer, and isoprene/butadiene copolymer elastomer.
